# EUROPEAN PATENT SPECIFICATION

(11) **EP 2 482 150 B1**
(45) Date of publication and mention of the grant of the patent: **26.03.2014**
(21) Application number: 12152104.1
(22) Date of filing: 23.01.2012
(51) Int. Cl.: G05B 19/042, G05B 15/02

(54) **Method and device for simplifying electrical installations**
Verfahren und Vorrichtung zur Vereinfachung elektrischer Installationen
Méthode er appareil pour simplifier des installations éléctriques

(30) Priority: 28.01.2011 BE 201100051
(43) Date of publication of application: 01.08.2012
(73) Proprietor: Niko NV, 9100 Sint-Niklaas (BE)
(72) Inventor: Veldeman, Pol, 9140 Temse (BE); Van Overloop, Isabelle, 9050 Gentbrugge (BE); Hillegeer, Sylvana, 9230 Wetteren (BE); Melis, Stijn Omer Marguerite, 9120 Melsele (BE)
(74) Representative: D'Halleweyn, Nele Veerle Trees Gertrudis

(56) References cited:
- WO-A1-2006/077201
- WO-A2-2005/065148
- DE-A1- 10 322 023
- DE-A1-102004 005 962
- US-A1- 2004 260 427

## Description

The present invention relates to a programmable electrical system, a device for use in configuring such a system in a building, and a method for configuring a programmable electrical system.

In recent years, electrical installations have become increasingly complex, among others because of the introduction of software-controlled automation elements in buildings such as houses or industrial buildings and spaces.

DE 103 22 023 discloses a system having a multimedia unit with which a data channel is coupled and controlled. A pocket PC is linked to a building over a channel. A table PC can show a matrix to control various units. The connectivity is made through a wireless LAN interface and the multimedia unit is connected to a loud speaker and television.

In the patent application on behalf of the Applicant entitled "Method for use in installing a home automation system, computer medium and computer program", filed on the same day as the present application, a process is described that allows an installer to program the operation of an automation or home automation system. According to said method, certain actions can be defined to link the behaviour of certain devices of the home automation system to certain incoming triggers or inputs. The programming is usually done taking into account the needs of the residents. In the system of the above-referenced patent application, among others, software is described to enter the layout of the building to which various input and output units and programmed actions thereof can be added. This should ensure that technicians are less reserved in trying out the wide range of available functions, and that they show relatively more creativity. However, there is the risk that many intrinsic features of the software are not used and that the relatively expensive components do not pose a substantial improvement over conventional electrical systems.

It is an object of the present invention to provide a device and a method of the type described in the preamble to further lower said threshold for the installer.

According to a first aspect of the present invention, there is provided a programmable electrical system in a building according to claim 1. The electrical system comprises at least one input unit and at least one output unit. The device comprises at least one storage means with a library of predefined actions. Said library can be stored both in the system itself, as well as on the PC of the installer. Each action defines a behaviour of one or more output units as a function of a status of one or more input units. For each action, a description thereof and the one or more output units and one or more input units associated therewith are stored. The device further comprises an interaction means arranged to communicate an overview of at least a part of the actions to a user, to have a user select one of the respective actions, and, after selecting a particular action by the user, to communicate the description thereof to a user and to guide him, as it were, through the choices he makes or is able to make.

By providing such a device, it is expected that, this may lead in practice to more complex home automation systems which better meets the expectations of the residents of a building.

In preferred embodiments, the one or more input units are associated with switches, touch-screen displays or sensors. The sensors may, for example, be a temperature sensor, or a light sensor, or an (air) humidity sensor, rain sensor, air pressure sensor, a motion sensor or a sensor able to detect specific states of a functional electrical unit (for example the status of a sun blind that can be electrically set in different positions, or an on/off status of a simple electrical switch). Other sensors are also possible, as the skilled person will understand.

In preferred embodiments, the output units are associated with fans, light generating units, engines or displays. Other annotations are also possible, as will be recognized by the skilled person. In typical home automation systems, including the system incorporated by reference above in this text, the input units are arranged to communicate with one or more central control units, centrally or decentrally incorporated in the system, for example over a data bus, but optionally also wireless, and the output units are typically controllable via modules in a control box or decentrally by the current supply to the respective output units. These modules in the control box and/or decentralized modules may also communicate with the same central or decentralized control units. Hence, a status of an input unit is appropriately transmitted via one or more control units to the module connected to an output unit.

According to a preferred embodiment, the interaction means is further arranged to communicate to the user one or more output units and one or more input units associated with the action, preferably by a visual representation thereof. The storage means may further store an installation plan and the interaction means may further be arranged to make selectable to a user one or more of the one or more output units and one or more input units associated with the action. In addition to selecting the existing input units and output units, it is possible to create and add a new input unit or output unit the moment it is necessary to make the selection. Afterwards, the optionally selected one or more input and/or output units may be stored in the installation plan.

According to a preferred embodiment, the interacting means is further arranged to communicate to the user one or more parameters of the one or more output units and/or one or more input units associated with the action. The interaction means is preferably further arranged to make changeable by the user one or more parameters of the one or more output units and/or one or more input units associated with the action.

According to a preferred embodiment, the interacting means is further arranged to propose to the user one or more actions which can be implemented with the available one or more input units and output units, wherein the one or more actions are aimed at achieving a more favourable energy consumption.

Furthermore, the interaction means is able to calculate the expected energy savings based on the data from the automation system.

When an "all off" button is defined, wherein all lighting armatures and electrical appliances are switched off, the system may propose to add the thermostatic valves present to this action as well. In this way, upon activation of the "all off" button, the provided control of the thermostatic valves will be cancelled and replaced by the parameters as entered in the action. When parameters, such as cost of electricity, are present in the system, the interaction means may calculate and display the energy savings.

Furthermore, an action may be linked to a condition for executing the defined behaviour, and the interaction means may further be arranged to communicate this condition to the user, and in particular to have this condition changeable by the user. When the user wishes to make changes at this moment, he will only be able to select those input units and output units which are allowed for this action. Again, at that moment, new input units and/or output units may be created, but again, only those will be created that could apply to this specific action.

In preferred embodiments, the condition comprises activation conditions which are virtual. By 'virtual' is understood that the signal entered does not directly correspond to the actual event, but that there is a meaning behind it. An example thereof may be that it is desirable that, when the children are asleep, the doorbell shall no longer ring, but lights should be flashing in the living room. Hence, it is possible to program a switch or a button on the switch such that when the children are asleep, the button may be activated. The activation of this button is the virtually displaying the condition "children asleep" and consequently, the input units and/or output units associated with this specific action, will be adequately controlled.

In preferred embodiments, respective activation conditions comprise time conditions. Services exist that are able to control an output unit such as, for example, a thermostatic valve depending on the time of the day. In preferred embodiments, respective activation conditions comprise temperature conditions. Services exist that are able to control an output unit such as a thermostatic valve as a function of the temperature of part of the building, received from an input unit such as a temperature sensor.

In preferred embodiments, respective activation conditions comprise presence conditions. These presence conditions may or may not be virtual.

In preferred embodiments, the device is arranged to communicate with one or more central or decentralized control units of a home automation system.

In preferred embodiments, the device is arranged to receive information concerning the input units and output units present of such control units.

The device further comprises a filter means arranged to determine whether any one of the respective actions is truly able to be executed with the available input units and output units, and the interaction means is arranged to communicate to the user only those actions deemed feasible, or to allow the user to add further input units and/or output units to be considered.

In the second aspect of the present invention, a method is described for configuring a programmable electrical system in a building according to claim 12, wherein the electrical system comprises at least one output unit and at least one input unit. The method comprises consulting a library of predefined actions, wherein each action defines a behaviour of one or more output units in terms of a status of one or more input units, wherein for each action a description thereof and one or more output units and one or more input units associated therewith are stored, and communicating at least a part of the respective actions to a user; receiving a selection of the user from the part of the communicated actions; and displaying on a display the description of the selected action to the user.

An input or output unit may be one of the input units or output units respectively, as described above.

According to an advantageous embodiment, the one or more output units and one or more input units associated with the action are displayed to the user, preferably in graphical format. Furthermore, advantageously an installation plan of the electrical system can be stored and one or more output units and one or more input units associated with the action after selection by a user can be stored in the installation plan.

According to a further developed embodiment, one or more parameters of the one or more output units and/or one or more input units associated with the action are displayed to the user. When an action is further linked to a condition for executing the defined behaviour, this condition may also be displayed to the user. This condition may use, for example, time conditions and/or temperature conditions and/or presence conditions and/or the status of a particular output means and/or virtual conditions.

In preferred embodiments, the method further comprises communicating with one or more central or decentralized control units of an automation or home automation system. In this case, information concerning the input units and output units present in the home automation system can be received.

The method further comprises determining whether each of the respective actions is able to be executed with the available input units and output units, based on the respective information elements, and communicating only those actions deemed feasible, or to allow the user to add further input units and/or output units to be considered by communicating the missing units.
In the third aspect of the present invention, a computer program is described that comprises a coding means adapted to execute all steps of an embodiment of the second aspect when run on a computer.

Further aspects of the present invention are described in the dependent claims. The features of the dependent claims, features of one of the dependent claims and one of the features of other dependent claims may be joined and found suitable by the skilled person, and not only in the specific combinations as determined by the claims.

The description of the aspects of the present invention is accomplished by means of specific embodiments and with reference to certain drawings, but is not limited to thereto. The depicted figures are merely schematic and should not be considered as restrictive. Reference symbols are chosen such that they are identical for similar or identical elements or features in various figures and drawings.

In the description of certain embodiments according to the present invention, different features are sometimes combined into a single embodiment, figure, or description thereof for the purpose of contributing to the understanding of one or more of several inventive steps.

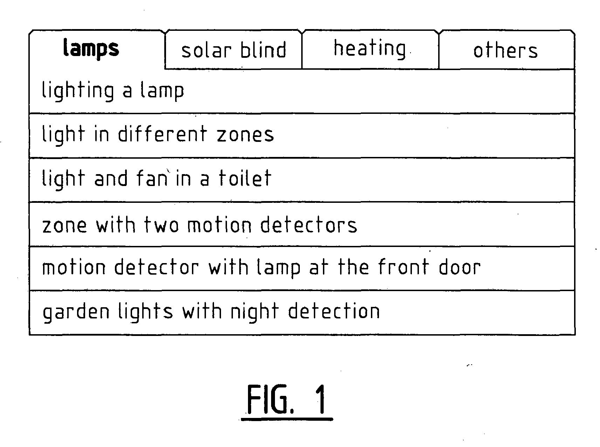

An example according to embodiments of the present invention is shown in Figure 1.

In Fig. 1 an illustration of an interface of the device with an installer/user is depicted, such as for example a display.

As is indicated in the application incorporated in this text, an installer of an electrical installation, to program the system, may do this using a computer program. The device according to the first aspect of the present invention may be, for example, a computer. This computer comprises software according to aspects of the present invention. Preferably, the automation or home automation system for which the software has been developed, is a system wherein input units communicate in one way or another their change of status to a central control unit, for example over a data bus, data line or other wired connection, or over a wireless interface. The control unit determines which actions will be triggered thereof and controls certain modules, to power the corresponding output units (for example fan and light) and hence, switch them on. Note that the modules can also be arranged to control the power also in a continuous way, for example, to control the fan speed of a fan or the light intensity of a lamp.

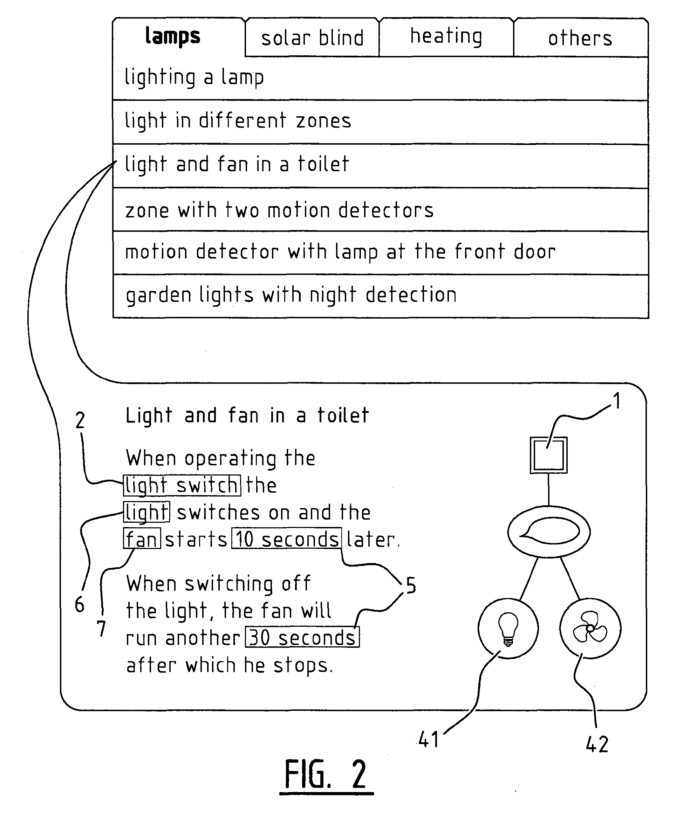

The interface as shown in Fig. 1, communicates with the user a list of possible services (also called actions), for example to depict these on a display. To this end, a library is consulted that contains the necessary information. The library is typically predefined in the software, and can be updated using appropriate updates. Next, the user may select one of the services or actions and indicate that he would like to receive further information thereof. This may lead in preferred embodiments to retrieving respective information elements or a description, and depicting said information on the display. This may be done in a systematic manner, wherein different selection or input fields are presented to the user. In the example shown in Fig. 1, several pages are shown comprising services concerning corresponding topics, for example lamps, solar blinds, heating and others. Next, in a first step, the user/installer may select a subject or category of services, such as "lamps" after which a number of services, typically a large number of common services, are depicted in said category (see Fig. 2), and after which the installer selects one of the depicted services.

By way of example, the installer may select such service (action) depicting the installation of a typical electrical functionality in the toilet, indicated with the name "light and fan in a toilet." After its selection, the description is communicated to the installer. This may be done in several ways, which are known to the skilled person. For example, a pop-up screen, text, text bar or even the visual display may appear indicating that for such a service at least one switch 1, at least one lighting device 41, and at least one fan 42 should be present. If this is not the case, the installer may still add the necessary input units or output units. For this, he may, for example, interact with the fields 2, 6 or 7 (see Fig. 2). If this is the case, optionally after the addition of input units or output units by the installer, the installer may, for example, also be given the opportunity to change or input certain parameters. This can be done, for example, through interaction with the fields 5. The installer will have the opportunity to confirm the configuration of a chosen service and store it in a configuration file. Next , this configuration file may be transferred to a control unit of the home automation system of the building/house, arranged to read and use the configuration file.

If the actual electronic system matches the system considered in the software, the operation of the actual system will match it. In this example, the switch 1, when "switching" the switch on (bringing it in the first state ("on" position)) (the second state is the "off" position), will activate both the fan and the lamp on the toilet, wherein, for example, if the parameters were/could not be changed, the fan will be switched on 10 seconds after switching on the switch, and wherein the fan will run another 30 seconds after switching off the switch.

It will be appreciated by the skilled person that the device will allow him to program more complex services in the automation or home automation system, with a relatively limited time loss and with the guarantee that everything will also work as intended.

While some embodiments described herein, comprise some, but not other features included in other embodiments, combinations or features of different embodiments are intended to be comprised within the scope of the invention, and to form various embodiments, as would be understood by a skilled person.

While the principles of the invention are described above in connection with specific embodiments of the invention, it should be clearly understood that this description is only made by way of example, and is not limiting for the scope of protection defined by the appended claims.

## Claims

1. Programmable electrical system comprising at least one output unit and at least one input unit, and a device for use in configuring the programmable electrical system in a building, said device comprising
a storage means comprising a library of predefined actions, wherein each action defines a behaviour of one or more output units as a function of a status of one or more input units, wherein for each action, a description thereof and the one or more output units and one or more input units associated therewith are stored;
an interaction means arranged to communicate an overview of at least a part of the actions to a user, to have a user select one of the respective actions, and, after selecting a particular action by the user, to communicate the description thereof to a user; and
a filter means arranged to determine whether any one of the actions is able to be executed with particular available input and output units;
wherein the interaction means is arranged to communicate to the user only those actions deemed feasible; or
wherein the filter means is further arranged to determine which of the required input units and/or output units is not present for a particular action, and wherein the interaction means is arranged to only communicate the missing units to the user.

2. System according to claim 1, further comprising one or more control units of an automation or home automation system arranged to read and use a configuration file; and
wherein the device is arranged to communicate with the one or more control units and is arranged to transfer a configuration file including the configuration of the action selected by the user to the one or more control units.

3. System according to claim 1 or 2, **characterized in that** the interaction means is further arranged to communicate, preferably visually display to the user the one or more output units and one or more input units associated with the action.

4. System according to claim 3, **characterized in that** on the storage means further an installation plan is stored and that the interaction means are further arranged to make selectable to a user one or more of the one or more output units and one or more input units associated with the action, and to store the optionally selected one or more input and/or output units in the installation plan.

5. System according to any one of the preceding claims, **characterized in that** the interaction means is further arranged to communicate to the user one or more parameters of one or more output units and/or one or more input units associated with the action, and **in that** the interaction means is preferably arranged to allow a user to change one or more parameters associated with the action of one or more output units and/or one or more input units.

6. System according to any one of the preceding claims, **characterized in that** the interaction means is further arranged to propose to the user one or more actions which can be implemented with the available one or more input units and output units, wherein the one or more actions are aimed at achieving a more favourable energy consumption.

7. System according to claim 6, **characterized in that** the interaction means is further arranged to calculate the expected energy savings based on the data from the automation system.

8. System according to any one of the preceding claims, **characterized in that** an action may be further linked to a condition for executing the defined behaviour, and that the interaction means is furnished for this condition continue to communicate to the user; wherein the interaction means is preferably arranged to make this condition changeable by the user; and/or wherein the condition comprises one or more of the following elements: time conditions, temperature conditions; presence conditions, virtual conditions.

9. System according to any one of the preceding claims, **characterized in that** an input unit is associated with one of the following elements: a switch, a sensor, a touch screen, a smart phone; and/or **in that** an output unit is associated with one of the following elements: fans, light generating units, engines, displays, electrically controlled valves.

10. System according to any one of the preceding claims, wherein the device is designed to receive information concerning the input units and output units present in the home automation system.

11. Device for use in configuring a programmable electrical system according to any of the claims 1-10, comprising:
a storage means comprising a library of predefined actions, wherein each action defines a behaviour of one or more output units as a function of a status of one or more input units, wherein for each action, a description thereof and the one or more output units and one or more input units associated therewith are stored;
an interaction means arranged to communicate an overview of at least a part of the actions to a user, to have a user select one of the respective actions, and, after selecting a particular action by the user, to communicate the description thereof to a user; and
a filter means arranged to determine whether any one of the actions is able to be executed with particular available input and output units;
wherein the interaction means is arranged to communicate to the user only those actions deemed feasible; or
wherein the filter means is further arranged to determine which of the required input units and/or output units is not present for a particular action, and wherein the interaction means is arranged to only communicate the missing units to the user.

12. Method for configuring a programmable electrical system in a building, wherein the electrical system comprises at least one output unit and at least one input unit, comprising
consulting a library of predefined actions, wherein each action defines a behaviour of one or more output units in terms of a status of one or more input units, wherein for each action a description thereof and one or more output units and one or more input units associated therewith are stored;
communicating at least a part of the respective actions to a user;
receiving a selection of the user from the part of the communicated actions;
displaying on a display the description of the selected action to the user;
determining whether each of the respective actions can be executed with certain available input units and output units; and
communicating only the actions deemed feasible; or communicating the missing units.

13. Method according to claim 12, **characterized in that** the one or more output units and one or more input units associated with the action are displayed to the user, preferably visually displayed to the user.

14. Method according to any one of the claims 12-13, further comprising communicating with one or more central or decentralized control units of an automation or home automation system.

15. Computer program comprising a computer program coding means adapted to execute the steps of one of the claims 12 to 14 when the program is run on a computer.

## Patentansprüche

1. Programmierbares elektrisches System, das wenigstens eine Ausgabeeinheit und wenigstens eine Eingabeeinheit und eine Vorrichtung zur Verwendung beim Konfigurieren des programmierbaren elektrischen Systems in einem Gebäude umfasst, wobei die Vorrichtung umfasst:
- eine Speichereinrichtung, die eine Bibliothek von vordefinierten Aktionen umfasst, wobei jede Aktion ein Verhalten von einer oder mehreren Ausgabeeinheiten als Funktion eines Status von einer oder mehreren Eingabeeinheiten definiert, wobei für jede Aktion ihre Beschreibung und die eine oder mehreren Ausgabeeinheiten und die eine oder mehreren Eingabeeinheiten, die damit verbunden sind, gespeichert sind,
- eine Interaktionseinrichtung, die angeordnet ist, um eine Übersicht von wenigstens einem Teil der Aktionen an einen Benutzer zu übermitteln, damit ein Benutzer eine der entsprechenden Aktionen auswählt, und um nach dem Auswählen einer bestimmten Aktion durch den Benutzer deren Beschreibung an den Benutzer zu übermitteln, und
- eine Filtereinrichtung, die angeordnet ist, um zu bestimmen, ob irgendeine der Aktionen mit bestimmten verfügbaren Eingabe- und Ausgabeeinheiten ausgeführt werden kann,
wobei die Interaktionseinrichtung angeordnet ist, um lediglich diejenigen Aktionen an den Benutzer zu übermitteln, die als durchführbar gelten, oder
wobei die Filtereinrichtung ferner angeordnet ist, um zu bestimmen, welche von den erforderlichen Eingabeeinheiten und/oder Ausgabeeinheiten für eine bestimmte Aktion nicht vorhanden sind, und wobei die Interaktionseinrichtung angeordnet ist, um lediglich die fehlenden Einheiten an den Benutzer zu übermitteln.

2. System nach Anspruch 1, das ferner eine oder mehrere Steuereinheiten eines Automations- oder Hausautomationssystems umfasst, die angeordnet sind, um eine Konfigurationsdatei zu lesen und zu verwenden, und
wobei die Vorrichtung angeordnet ist, um mit der einen oder den mehreren Steuereinheiten zu kommunizieren, und angeordnet ist, um eine Konfigurationsdatei, die die Konfiguration der Aktion, die vom Benutzer ausgewählt wurde, umfasst, an die eine oder mehreren Steuereinheiten zu übertragen.

3. System nach Anspruch 1 oder 2, **dadurch gekennzeichnet, dass** die Interaktionseinrichtung ferner angeordnet ist, um die eine oder mehreren Ausgabeeinheiten und die eine oder mehreren Eingabeeinheiten, die mit der Aktion verbunden sind, an den Benutzer zu übermitteln, vorzugsweise visuell anzuzeigen.

4. System nach Anspruch 3, **dadurch gekennzeichnet, dass** in der Speichereinrichtung ferner ein Installationsplan gespeichert ist und die Interaktionseinrichtung ferner angeordnet ist, um eine oder mehrere der einen oder mehreren Ausgabeeinheiten und der einen oder mehreren Eingabeeinheiten, die mit der Aktion verbunden sind, für einen Benutzer auswählbar zu machen, und um die optional ausgewählte eine oder mehreren Eingabe- und/oder Ausgabeeinheiten im Installationsplan zu speichern.

5. System nach einem der vorhergehenden Ansprüche, **dadurch gekennzeichnet, dass** die Interaktionseinrichtung ferner angeordnet ist, um einen oder mehrere Parameter von einer oder mehreren Ausgabeeinheiten und/oder einer oder mehreren Eingabeeinheiten, die mit der Aktion verbunden sind, an den Benutzer zu übermitteln, und dass die Interaktionseinrichtung vorzugsweise angeordnet ist, um einem Benutzer zu ermöglichen, einen oder mehrere Parameter zu ändern, die mit der Aktion von einer oder mehreren Ausgabeeinheiten und/oder einer oder mehreren Eingabeeinheiten verbunden sind.

6. System nach einem der vorhergehenden Ansprüche, **dadurch gekennzeichnet, dass** die Interaktionseinrichtung ferner angeordnet ist, um dem Benutzer eine oder mehrere Aktionen vorzuschlagen, die mit der verfügbaren einen oder mehreren Eingabeeinheiten und Ausgabeeinheiten implementiert werden können, wobei die eine oder mehreren Aktionen auf das Erreichen eines günstigeren Energieverbrauchs abzielen.

7. System nach Anspruch 6, **dadurch gekennzeichnet, dass** die Interaktionseinrichtung ferner angeordnet ist, um die erwartete Energieeinsparung basierend auf den Daten des Automationssystems zu berechnen.

8. System nach einem der vorhergehenden Ansprüche, **dadurch gekennzeichnet, dass** eine Aktion ferner mit einer Bedingung für das Ausführen des definierten Verhaltens verbunden sein kann und dass die Interaktionseinrichtung angeordnet ist, um diese Bedingung an den Benutzer weiterhin zu übermitteln, wobei die Interaktionseinrichtung vorzugsweise angeordnet ist, um diese Bedingung durch den Benutzer veränderbar zu gestalten, und/oder wobei die Bedingung eines oder mehrere der folgenden Elemente umfasst: Zeitbedingungen, Temperaturbedingungen, Anwesenheitsbedingungen, virtuelle Bedingungen.

9. System nach einem der vorhergehenden Ansprüche, **dadurch gekennzeichnet, dass** eine Eingabeeinheit mit einem der folgenden Elemente verbunden ist: einem Schalter, einem Sensor, einem Touchscreen, einem Smartphone, und/oder dass eine Ausgabeeinheit mit einem der folgenden Elemente verbunden ist: Lüftern, lichterzeugenden Einheiten, Motoren, Displays, elektrisch gesteuerten Ventilen.

10. System nach einem der vorhergehenden Ansprüche, wobei die Vorrichtung dafür konstruiert ist, Informationen bezüglich der Eingabeeinheiten und Ausgabeeinheiten, die in dem Hausautomationssystem vorhanden sind, zu empfangen.

11. Vorrichtung zur Verwendung beim Konfigurieren eines programmierbaren elektrisches Systems nach einem der Ansprüche 1 bis 10, umfassend:
- eine Speichereinrichtung, die eine Bibliothek von vordefinierten Aktionen umfasst, wobei jede Aktion ein Verhalten von einer oder mehreren Ausgabeeinheiten als Funktion eines Status von einer oder mehreren Eingabeeinheiten definiert, wobei für jede Aktion ihre Beschreibung und die eine oder mehreren Ausgabeeinheiten und die eine oder mehreren Eingabeeinheiten, die damit verbunden sind, gespeichert sind,
- eine Interaktionseinrichtung, die angeordnet ist, um eine Übersicht von wenigstens einem Teil der Aktionen an einen Benutzer zu übermitteln, damit ein Benutzer eine der entsprechenden Aktionen auswählt, und um nach dem Auswählen einer bestimmten Aktion durch den Benutzer deren Beschreibung an den Benutzer zu übermitteln, und
- eine Filtereinrichtung, die angeordnet ist, um zu bestimmen, ob irgendeine der Aktionen mit bestimmten verfügbaren Eingabe- und Ausgabeeinheiten ausgeführt werden kann,
wobei die Interaktionseinrichtung angeordnet ist, um lediglich diejenigen Aktionen an den Benutzer zu übermitteln, die als durchführbar gelten, oder
wobei die Filtereinrichtung ferner angeordnet ist, um zu bestimmen, welche von den erforderlichen Eingabeeinheiten und/oder Ausgabeeinheiten für eine bestimmte Aktion nicht vorhanden sind, und wobei die Interaktionseinrichtung angeordnet ist, um lediglich die fehlenden Einheiten an den Benutzer zu übermitteln.

12. Verfahren zum Konfigurieren eines programmierbaren elektrisches Systems in einem Gebäude, wobei das elektrische System wenigstens eine Ausgabeeinheit und eine Eingabeeinheit umfasst, und wobei das Verfahren umfasst:
- das Abfragen einer Bibliothek von vordefinierten Aktionen, wobei jede Aktion ein Verhalten von einer oder mehreren Ausgabeeinheiten in Form eines Status von einer oder mehreren Eingabeeinheiten definiert, wobei für jede Aktion ihre Beschreibung und eine oder mehrere Ausgabeeinheiten und eine oder mehrere Eingabeeinheiten, die damit verbunden sind, gespeichert sind,
- das Übermitteln wenigstens eines Teils der entsprechenden Aktionen an einen Benutzer,
- das Empfangen einer Auswahl des Benutzers von dem Teil der übermittelten Aktionen,
- das Anzeigen der Beschreibung der ausgewählten Aktion für den Benutzer auf einem Display,
- das Bestimmen, ob jede der entsprechenden Aktionen mit bestimmten verfügbaren Eingabeeinheiten und Ausgabeeinheiten ausgeführt werden kann, und
- das Übermitteln lediglich der Aktionen, die als durchführbar gelten, oder das Übermitteln der fehlenden Einheiten.

13. Verfahren nach Anspruch 12, **dadurch gekennzeichnet, dass** die eine oder mehreren Ausgabeeinheiten und die eine oder mehreren Eingabeeinheiten, die mit der Aktion verbunden sind, dem Benutzer angezeigt werden, dem Benutzer vorzugsweise visuell angezeigt werden.

14. Verfahren nach einem der Ansprüche 12 bis 13, das ferner das Kommunizieren mit einer oder mehreren zentralen oder dezentralen Steuereinheiten eines Automations- oder Hausautomationssystems umfasst.

15. Computerprogramm, das eine Computerprogrammcodeeinrichtung umfasst, die geeignet ist, die Schritte von einem der Ansprüche 12 bis 14 auszuführen, wenn das Programm auf einem Computer ausgeführt wird.

## Revendications

1. Système électrique programmable comprenant au moins une unité de sortie et au moins une unité d'entrée, et un dispositif devant être utilisé pour configurer le système électrique programmable dans un bâtiment, ledit dispositif comprenant
un moyen de stockage comprenant une banque d'actions prédéfinies, chacune des actions définissant un comportement d'une ou plusieurs unités de sortie en fonction de l'état d'une ou plusieurs unités d'entrée, dans lequel pour chaque action, une description de celle-ci et d'une ou plusieurs unités de sortie qui y sont associées est stockée;
un moyen d'interaction configuré pour communiquer un aperçu général d'au moins une partie des actions de l'utilisateur, pour permettre à l'utilisateur de sélectionner une des actions respectives, et, après la sélection d'une action donnée par l'utilisateur, de communiquer la description de celle-ci à un utilisateur; et
un moyen de filtre configuré pour déterminer la possibilité d'exécution de l'une quelconque des actions avec des unités d'entrée et de sortie disponibles particulières;
le moyen d'interaction étant configuré pour ne communiquer aux utilisateurs que les actions qui sont jugées réalisables; ou
le moyen de filtre étant en outre configuré pour déterminer laquelle des unités d'entrée et/ou de sortie nécessaires n'est pas présente pour une action donnée, et le moyen d'interaction étant configuré pour ne communiquer que les unités manquantes à l'utilisateur.

2. Système selon la revendication 1, comprenant en outre une ou plusieurs unités de contrôle d'un système d'automatisation ou domotique configuré pour lire et utiliser un fichier de configuration; et
le dispositif étant configuré pour communiquer avec l'une ou les plusieurs unités de contrôle et étant configuré pour transférer un fichier de configuration comprenant la configuration de l'action choisie par l'utilisateur vers l'une ou les plusieurs unités de contrôle.

3. Système selon la revendication 1 ou 2, **caractérisé en ce que** le moyen d'interaction est en outre configuré pour communiquer, de préférence pour afficher visuellement à l'utilisateur l'une ou les plusieurs unités de sortie et une ou plusieurs unités d'entrée associées à l'action.

4. Système selon la revendication 3, **caractérisé en ce qu'**un plan d'installation est en outre stocké sur le moyen de stockage et que les moyens d'interaction sont également configurés pour qu'une ou plusieurs de l'une ou plusieurs unités de sortie et une ou plusieurs unités d'entrée associées à l'action soient sélectionnables par un utilisateur, et pour stocker l'une ou les plusieurs unités d'entrée et/ou de sortie éventuellement choisies dans le plan d'installation.

5. Système selon l'une quelconque des revendications précédentes, **caractérisé en ce que** le moyen d'interaction est en outre configuré pour communiquer à l'utilisateur un ou plusieurs paramètres d'une ou plusieurs unités de sortie et/ou d'une ou plusieurs unités d'entrée associées à l'action, et **en ce que** le moyen d'interaction est de préférence configuré pour permettre à un utilisateur de modifier un ou plusieurs paramètres associés à l'action d'une ou plusieurs unités de sortie et/ou d'une ou plusieurs unités d'entrée.

6. Système selon l'une quelconque des revendications précédentes, **caractérisé en ce que** le moyen d'interaction est en outre configuré pour proposer à l'utilisateur une ou plusieurs actions qui peuvent être mises en oeuvre avec une ou plusieurs unités d'entrée et unités de sortie disponibles, l'une ou les plusieurs actions ayant pour objectif de parvenir à une consommation d'énergie plus favorable.

7. Système selon la revendication 6, **caractérisé en ce que** le moyen d'interaction est en outre configuré pour calculer les économies d'énergie escomptées en se basant sur les données du système d'automatisation.

8. Système selon l'une quelconque des revendications précédentes, **caractérisé en ce que** l'action peut en outre être liée à une condition permettant d'exécuter le comportement défini, et **en ce que** le moyen d'interaction est fourni pour que cette condition continue à communiquer avec utilisateur; le moyen d'interaction étant préférablement configuré pour permettre la modification de cette condition par l'utilisateur; et/ou la condition comprenant un ou plusieurs des éléments suivants: les conditions de temps, les conditions de température, les conditions de présence, les conditions virtuelles.

9. Système selon l'une quelconque des revendications précédentes, **caractérisé en ce qu'**une unité d'entrée est associée à l'un des éléments suivants : un commutateur, un capteur, un écran tactile, un téléphone intelligent; et/ou **en ce que** l'unité de sortie est associée à l'un des éléments suivants: des ventilateurs, des unités génératrices de lumière, des moteurs, des écrans, des soupapes à commande électrique.

10. Système selon l'une quelconque des revendications précédentes, dans lequel le dispositif est conçu pour recevoir des informations concernant les unités d'entrée et les unités de sortie présentes dans le système domotique.

11. Dispositif devant être utilisé dans la configuration d'un système électrique programmable selon l'une quelconque des revendications 1 à 10, comprenant:
un moyen de stockage comprenant une banque d'actions prédéfinies, chacune des actions définissant un comportement d'une ou plusieurs unités de sortie en fonction de l'état d'une ou plusieurs unités d'entrée, dans lequel pour chaque action, une description de celle-ci et l'une ou plusieurs unités de sortie et l'une ou plusieurs unités d'entrée qui y sont associées sont stockées;
un moyen d'interaction configuré pour communiquer un aperçu général d'au moins une partie des actions à un utilisateur, pour permettre à l'utilisateur de sélectionner une plusieurs actions respectives, et, après la sélection d'une action particulière par l'utilisateur, de communiquer la description de celle-ci à un utilisateur; et
un moyen de filtre configuré pour déterminer la possibilité d'exécution de l'une quelconque des actions avec les unités d'entrée et de sortie particulières disponibles;
le moyen d'interaction étant configuré pour ne communiquer aux utilisateurs que les actions qui sont jugées réalisables; ou
le moyen de filtre étant en outre configuré pour déterminer laquelle des unités d'entrée et/ou de sortie nécessaires n'est pas présente pour une action particulière, et le moyen d'interaction étant configuré pour ne communiquer que les unités manquantes à l'utilisateur.

12. Procédé permettant de configurer un système électrique programmable dans un bâtiment, dans lequel le système électrique comprend au moins une unité de sortie et au moins une unité d'entrée, comprenant
la consultation d'une banque d'actions prédéfinies, dans laquelle chaque action définit un comportement d'une ou plusieurs unités de sortie du point de vue d'un état d'une ou plusieurs unités d'entrée, dans laquelle pour chaque action une description de celle-ci et une ou plusieurs unités de sortie et une ou plusieurs unités d'entrée associées à celles-ci sont stockées;
la communication d'au moins une partie des actions respectives à l'utilisateur;
la réception d'une sélection de l'utilisateur provenant de la partie des actions communiquées; l'affichage sur un écran de la description de l'action sélectionnée destiné à l'utilisateur;
la détermination du fait que chacune des actions respectives peut être exécutée avec certaines unités d'entrée et unités de sortie disponibles; et
la communication des actions qui sont jugées réalisables seulement; ou la communication des unités manquantes.

13. Procédé selon la revendication 12, **caractérisé en ce qu'**une ou plusieurs unités de sortie et une ou plusieurs unités d'entrée associées à l'action sont affichées pour l'utilisateur, de préférence affichées visuellement pour l'utilisateur.

14. Procédé selon l'une quelconque des revendications 12 à 13, comprenant en outre la communication avec une ou plusieurs unités de contrôle centralisées ou décentralisées d'un système d'automatisation ou domotique.

15. Programme informatique comprenant un moyen de codage de programme informatique adapté pour exécuter des étapes de l'une des revendications 12 à 14 lorsque le programme est exécuté sur un ordinateur.
